# EUROPEAN PATENT APPLICATION

(11) **EP 4 783 089 A1**
(43) Date of publication of application: **29.07.2026**
(21) Application number: 24897016.2
(22) Date of filing: 28.08.2024
(51) Int. Cl.: G06Q 10/20

(54) **WORK RECORDING SYSTEM AND WORK RECORDING METHOD**

(30) Priority: 28.11.2023 JP 2023200708
(71) Applicant: Mitsubishi Heavy Industries, Ltd., Chiyoda-ku Tokyo 100-8332 (JP)
(72) Inventor: SHIROTORI, Kento, Tokyo 100-8332 (JP); YAMAZAKI, Shinsuke, Tokyo 100-8332 (JP); TORIMOTO, Kazutaka, Nagoya-shi, Aichi 460-0008 (JP)
(74) Representative: Hoffmann Eitle
(86) International application number: PCT/JP2024/030664
(87) International publication number: WO 2025/115325

(57) **Abstract**

Provided is a work recording system that records work performed on a work location by a worker, and that comprises: an imaging unit that captures an image of the work location to acquire a work image; and a control unit that executes quality processing for determining the quality of the work location on the basis of the work image. The control unit assigns quality information to the work image acquired by the imaging unit and records the work image to which the quality information has been assigned.

## Description

### Technical Field

The present disclosure relates to a work recording system and a work recording method.

### Background Art

In the related art, a system is known that provides past work performance related to a current work item to a worker through a wearable terminal mounted on the head of the worker in the form of images (for example, see PTL 1). In this system, an image captured by an imaging unit is acquired as a work result.

### Citation List

### Patent Literature

[PTL 1] Japanese Unexamined Patent Application Publication No. 2018-194914

### Summary of Invention

### Technical Problem

As the work result, for example, there is a quality of a work location on which work is performed by the worker. The quality of the work location is ensured by the worker checking the work location or performing an inspection, and quality control is performed by recording an image obtained by imaging the work location. Meanwhile, it is considered that the quality of the work location is ensured by determining the image of the work location. In this case, an image of the work location whose quality is ensured is required as training data for machine learning to perform image determination. In this case, the image needs to be acquired for machine learning, and thus learning efficiency is low.

Therefore, an object of the present disclosure is to provide a work recording system and a work recording method capable of acquiring an image used for pass/fail determination together with recording of maintenance work.

### Solution to Problem

A work recording system according to the present disclosure is a work recording system that records work performed by a worker on a work location, the work recording system including: an imaging unit that images the work location to acquire a work image; and a control unit that executes pass/fail processing for performing pass/fail determination of the work location based on the work image, in which the control unit assigns pass/fail information to the work image acquired by the imaging unit, and records the work image to which the pass/fail information is assigned.

In addition, a work recording method according to the present disclosure is a work recording method executed by a work recording system that records work performed by a worker on a work location, in which the work recording system includes an imaging unit that images the work location to acquire a work image, and a control unit that executes pass/fail processing for performing pass/fail determination of the work location based on the work image, and the control unit assigns pass/fail information to the work image acquired by the imaging unit, and records the work image to which the pass/fail information is assigned.

### Advantageous Effects of Invention

According to the present disclosure, it is possible to acquire an image used for pass/fail determination together with recording of maintenance work.

### Brief Description of Drawings

FIG. 1 is a diagram of a work recording system according to the present embodiment.
FIG. 2 is an explanatory diagram showing the work recording system according to the present embodiment in a functional manner.
FIG. 3 is a flowchart related to a work recording method according to the present embodiment.
FIG. 4 is a diagram of a work recording screen.

### Description of Embodiments

Hereinafter, an embodiment according to the present disclosure will be described in detail with reference to the drawings. Note that this disclosure is not limited to the embodiment. Further, components in the following embodiments include those that can be easily replaced by those skilled in the art or those that are substantially the same. Further, the components described below can be combined as appropriate, and in a case where there are a plurality of embodiments, the respective embodiments can also be combined.

### [Present Embodiment]

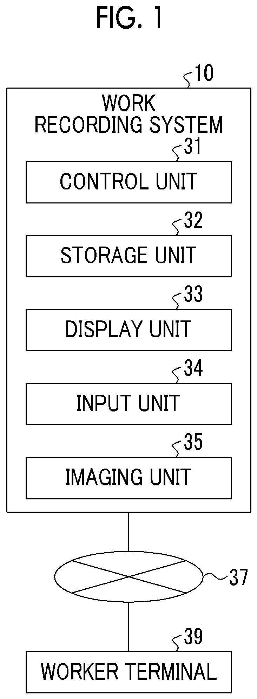

A work recording system 10 according to the present embodiment is a system that records work content of maintenance work on an aircraft. In the work recording system 10, the work content for a work location is recorded by a worker. The work recording system 10 may be used as a system that performs education and training of the maintenance work or may be used as a system that supports the implementation of the maintenance work. The work recording system 10 will be described with reference to FIG. 1.

### (Work Recording System)

FIG. 1 is a diagram of the work recording system according to the present embodiment. As shown in FIG. 1, the work recording system 10 includes a control unit 31, a storage unit 32, a display unit 33, an input unit 34, and an imaging unit 35. The work recording system 10 may be a wearable terminal or a stationary terminal, and is not particularly limited. In addition, a worker terminal 39 is connected to the work recording system 10 via a communication network 37. Although not shown, the worker terminal 39 has a display unit and an input unit, similarly to the work recording system 10, and is configured to receive input of information for recording the work.

The control unit 31 includes, for example, an integrated circuit such as a central processing unit (CPU). The control unit 31 executes data processing for recording the maintenance work. The storage unit 32 is any storage device such as a semiconductor storage device or a magnetic storage device. The storage unit 32 stores an image captured by the imaging unit 35, information generated by various types of processing, and the like. The display unit 33 is, for example, a display device such as a liquid crystal display. The input unit 34 is, for example, an input device such as a keyboard or a mouse. The imaging unit 35 is, for example, a camera.

The work recording system 10 presents information on planned maintenance work to the worker via the display unit 33. **In** addition, the work recording system 10 generates information on the progress of the maintenance work and information on the actual performance of the maintenance work by the worker inputting information on the work record of the maintenance work. Then, the work recording system 10 outputs the generated information on the actual performance of the maintenance work to a work record database (not shown).

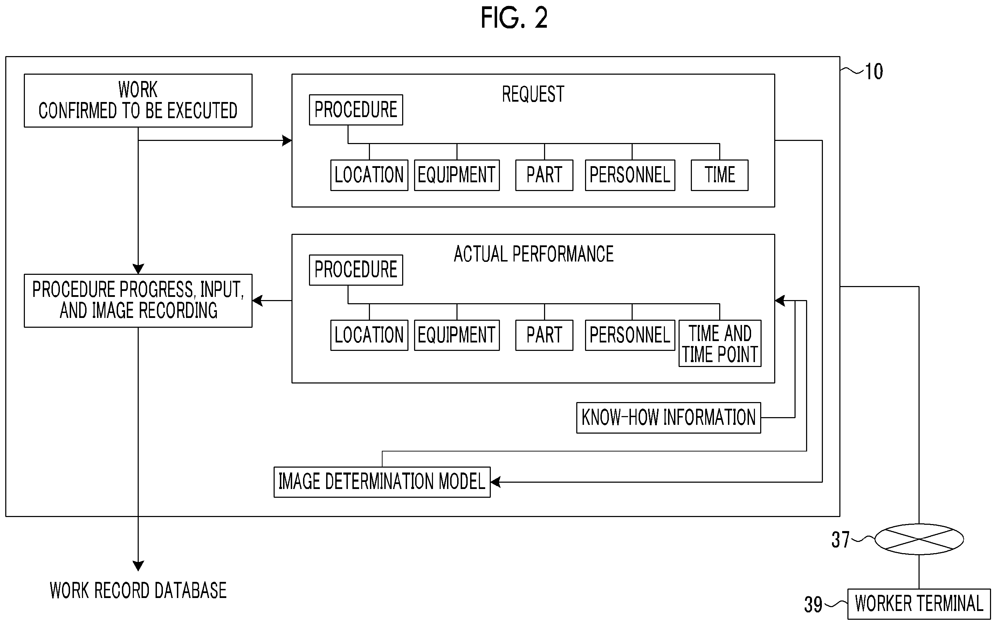

Next, an outline of functions of the work recording system 10 will be described with reference to FIG. 2. FIG. 2 is an explanatory diagram showing the work recording system according to the present embodiment in a functional manner. As shown in FIG. 2, the work recording system 10 acquires work request data that is data of maintenance work to be performed. The work request data is information for supporting the maintenance work, and is information on a resource in which a work procedure of the maintenance work, a location required for the maintenance work, equipment required for the maintenance work, a part required for the maintenance work, personnel for the maintenance work, and a working time required for the maintenance work are associated with each other.

In a case where the work recording system 10 acquires the work request data, the work recording system 10 supports the maintenance work based on the work request data. The work recording system 10 presents the work procedure of the maintenance work to the worker via the display unit 33. In addition, the work recording system 10 generates work record data based on information input by the worker, and outputs the generated work record data to the work record database.

In addition, the work recording system 10 requests the worker to record an image of a work location of the maintenance work during the support of the maintenance work. The work recording system 10 executes pass/fail processing on a work image acquired by the imaging unit 35 for performing pass/fail determination of the work location. Then, the work recording system 10 generates work record data including the work image after the pass/fail determination. The work record data is information on a resource of an actual performance after the maintenance work, and has the same data format as the work request data. In addition, the work record data also includes know-how information input by the worker.

### (Work Recording Method)

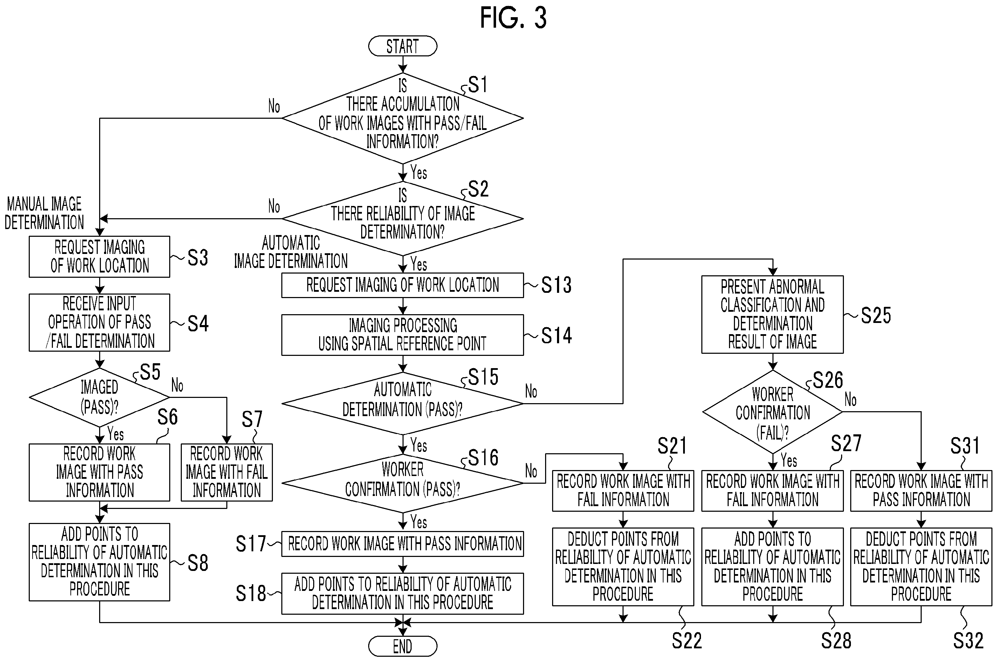

Next, a work recording method according to the present embodiment will be described with reference to FIG. 3. FIG. 3 is a flowchart related to the work recording method according to the present embodiment. The control unit 31 of the work recording system 10 executes pass/fail processing for performing pass/fail determination of the work location during the support of the maintenance work.

The control unit 31 of the work recording system 10 determines whether or not there is accumulation of work images to which pass/fail information is assigned, as the pass/fail processing (step S1). Specifically, in step S1, the control unit 31 determines whether or not the work images serving as determination materials for executing the automatic image determination processing described later have been accumulated in a number of images sufficient to execute the image determination. In a case where the control unit 31 determines that there is accumulation of the work images (step S1: Yes), the control unit 31 determines whether or not there is reliability of the image determination processing (step S2). In step S2, the control unit 31 determines whether or not the number of evaluation points of the image determination described later is equal to or greater than a predetermined number of evaluation points, thereby determining the reliability. In a case where the control unit 31 determines that there is reliability (step S2: Yes), the control unit 31 proceeds to the automatic image determination processing (step S13 to step S32) of automatically determining the image. On the other hand, in a case where the control unit 31 determines that there is no accumulation of the work images (step S1: No) or in a case where the control unit 31 determines that there is no reliability (step S2: No), the control unit 31 proceeds to the manual image determination processing (step S3 to step S8) in which the worker manually determines the images.

In a case where the control unit 31 proceeds to the manual image determination processing, the control unit 31 requests the worker to acquire the work image of the work location (step S3). In step S3, the control unit 31 displays a work recording screen 50 for acquiring the work image on the display unit 33.

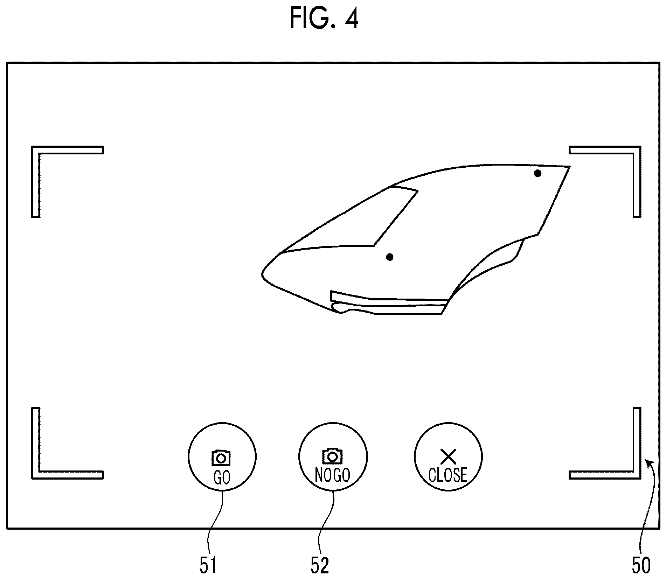

Here, the work recording screen displayed on the display unit 33 will be described with reference to FIG. 4. FIG. 4 is a diagram of the work recording screen. As shown in FIG. 4, the work recording screen 50 displays an image captured by the imaging unit 35. In addition, the work recording screen 50 displays a pass determination button 51 for performing pass determination of the work location and a fail determination button 52 for performing fail determination of the work location. The pass determination button 51 and the fail determination button 52 are buttons for determining the pass or fail of the work location, and are also buttons for capturing the image.

In step S3, in a case where the work recording screen 50 is displayed, the control unit 31 receives an input operation for the pass/fail determination (step S4). Then, the control unit 31 determines whether or not the work location is pass based on the operation of the pass determination button 51 or the fail determination button 52 input via the input unit 34 (step S5). In step S5, in a case where the control unit 31 determines that the pass determination button 51 has been operated, the control unit 31 determines that the work location is pass (step S5: Yes); on the other hand, in a case where the control unit 31 determines that the fail determination button 52 has been operated, the control unit 31 determines that the work location is fail (step S5: No).

In step S5, in a case where the control unit 31 determines that the work location is pass, the control unit 31 acquires the work image during the operation of the pass determination button 51, and assigns pass information to the acquired work image and records the acquired work image in the storage unit 32 (step S6). On the other hand, in step S5, in a case where the control unit 31 determines that the work location is fail, the control unit 31 acquires the work image during the operation of the fail determination button 52, and assigns fail information to the acquired work image and records the acquired work image in the storage unit 32 (step S7).

Then, after the execution of step S6 and step S7, the control unit 31 adds points in the scoring of the image determination such that the reliability of the automatic image determination is increased (step S8). After the execution of step S8, the control unit 31 ends the manual image determination processing.

On the other hand, in a case where the control unit 31 proceeds to the automatic image determination processing after the execution of step S2, the control unit 31 requests the worker to acquire the work image of the work location (step S13). The control unit 31, with the request in step S13 as a trigger, causes the imaging unit 35 to image the work location and executes imaging processing using a spatial reference point, thereby acquiring a work image (step S14). In step S14, the control unit 31 performs imaging such that the imaging range, such as the angle of view, with respect to the work location is at a predetermined position by using the spatial reference point. In step S14, in a case where the control unit 31 acquires the work image, the control unit 31 automatically determines the pass/fail of the work location based on the acquired work image (step S15). In step S15, the control unit 31 executes the pass/fail determination of the acquired work image based on the accumulated work images with the pass/fail information, and uses, for example, a learning model on which machine learning has been executed using the work images with the pass/fail information as training data.

In step S15, in a case where the control unit 31 determines that the work location is pass (step S15: Yes), the control unit 31 requests the worker to confirm whether the pass/fail determination is correct, that is, whether the work location is pass (step S16). In step S16, the worker inputs whether the work location is pass or fail using the input unit 34. Then, the control unit 31 determines whether the work location is pass or fail based on the input from the input unit 34. In a case where the control unit 31 determines that the work location is pass based on the confirmation from the worker (step S16: Yes), the control unit 31 assigns pass information to the acquired work image and records the acquired work image in the storage unit 32 (step S17).

Then, after the execution of step S17, the control unit 31 adds points in the scoring of the image determination such that the reliability of the automatic image determination is increased, assuming that the result of the automatic image determination and the confirmation result of the worker match (step S18). After the execution of step S18, the control unit 31 ends the automatic image determination processing.

On the other hand, in step S16, in a case where the control unit 31 determines that the work location is fail based on the confirmation from the worker (step S16: No), the control unit 31 assigns fail information to the acquired work image and records the acquired work image in the storage unit 32 (step S21).

Then, after the execution of step S21, the control unit 31 deducts points in the scoring of the image determination such that the reliability of the automatic image determination is decreased, assuming that the result of the automatic image determination and the confirmation result of the worker are different (step S22). After the execution of step S22, the control unit 31 ends the automatic image determination processing.

In addition, in step S15, in a case where the control unit 31 determines that the work location is fail (step S15: No), the control unit 31 presents the worker with the fact that the work image is classified and determined to be abnormal (step S25). After the execution of step S25, the control unit 31 requests the worker to confirm whether the pass/fail determination is correct, that is, whether the work location is fail (step S26). In a case where the control unit 31 determines that the work location is fail based on the confirmation from the worker (step S26: Yes), the control unit 31 assigns fail information to the acquired work image and records the acquired work image in the storage unit 32 (step S27).

Then, after the execution of step S27, the control unit 31 adds points in the scoring of the image determination such that the reliability of the automatic image determination is increased, assuming that the result of the automatic image determination and the confirmation result of the worker match (step S28). After the execution of step S28, the control unit 31 ends the automatic image determination processing.

On the other hand, in step S26, in a case where the control unit 31 determines that the work location does not fail, that is, the work location is pass, based on the confirmation from the worker (step S26: No), the control unit 31 assigns pass information to the acquired work image and records the acquired work image in the storage unit 32 (step S31).

Then, after the execution of step S31, the control unit 31 deducts points in the scoring of the image determination such that the reliability of the automatic image determination is decreased, assuming that the result of the automatic image determination and the confirmation result of the worker are different (step S32). After the execution of step S32, the control unit 31 ends the automatic image determination processing.

As described above, the work recording system 10 and the work recording method according to the present embodiment are understood as follows, for example.

A first aspect provides a work recording system 10 that records work performed by a worker on a work location, the work recording system 10 including: an imaging unit 335 that images the work location to acquire a work image; and a control unit 31 that executes pass/fail processing for performing pass/fail determination of the work location based on the work image, in which the control unit 31 assigns pass/fail information to the work image acquired by the imaging unit 35 and records the work image to which the pass/fail information is assigned.

According to this configuration, since the work image to which the pass/fail information is assigned can be recorded, the work location of the maintenance work can be recorded. In addition, since the pass/fail information is assigned to the work image, the work image can be used as training data for image determination. Accordingly, the image used for the pass/fail determination can be acquired together with the recording of the maintenance work.

As a second aspect, in the work recording system 10 according to the first aspect, the control unit 31 requests the worker to perform the pass/fail determination in a case where the control unit 31 determines that accumulation of the recorded work images is not accumulation sufficient to execute the pass/fail determination of the work location.

According to this configuration, the work image to which the pass/fail information is assigned by the worker can be acquired while suppressing erroneous determination of the pass/fail determination.

As a third aspect, in the work recording system 10 according to the first or second aspect, the control unit 31 executes the pass/fail determination based on the accumulated work images in a case where the control unit 31 determines that the accumulation of the recorded work images is accumulation sufficient to execute the pass/fail determination of the work location.

According to this configuration, since the work images to which the pass/fail information is assigned are sufficiently accumulated, the pass/fail determination can be executed with high accuracy.

As a fourth aspect, the work recording system 10 according to any one of the first to third aspects further including: a display unit 33 that displays an image captured by the imaging unit 35; and an input unit 34 that inputs the pass/fail determination of the work location, in which the input unit 34 includes a pass determination button 51 for performing pass determination of the work location and a fail determination button 52 for performing fail determination of the work location, and the control unit 31 acquires the work image at the time of input of the pass determination button 51 or the fail determination button 52, and assigns the pass/fail information to the work image.

According to this configuration, the work image to which the pass/fail information is assigned can be easily acquired by operating the pass determination button 51 or the fail determination button 52.

A fifth aspect provides a work recording method executed by a work recording system 10 that records work performed by a worker on a work location, in which the work recording system 10 includes an imaging unit 35 that images the work location to acquire a work image and a control unit 31 that executes pass/fail processing for performing pass/fail determination of the work location based on the work image, and the control unit 31 assigns pass/fail information to the work image acquired by the imaging unit 35 and records the work image to which the pass/fail information is assigned.

According to this configuration, since the work image to which the pass/fail information is assigned can be recorded, the work location of the maintenance work can be recorded. In addition, since the pass/fail information is assigned to the work image, the work image can be used as training data for image determination. Accordingly, the image used for the pass/fail determination can be acquired together with the recording of the maintenance work.

### Reference Signs List

10: Work recording system
31: Control unit
32: Storage unit
33: Display unit
34: Input unit
35: Imaging unit
37: Communication network
39: Worker terminal

## Claims

1. A work recording system that records work performed by a worker on a work location, the work recording system comprising:
an imaging unit that images the work location to acquire a work image; and
a control unit that executes pass/fail processing for performing pass/fail determination of the work location based on the work image,
wherein the control unit
assigns pass/fail information to the work image acquired by the imaging unit, and
records the work image to which the pass/fail information is assigned.

2. The work recording system according to Claim 1,
wherein the control unit requests the worker to perform the pass/fail determination in a case where the control unit determines that accumulation of the recorded work images is not accumulation sufficient to execute the pass/fail determination of the work location.

3. The work recording system according to Claim 1,
wherein the control unit executes the pass/fail determination based on the accumulated work images in a case where the control unit determines that accumulation of the recorded work images is accumulation sufficient to execute the pass/fail determination of the work location.

4. The work recording system according to Claim 1, further comprising:
a display unit that displays an image captured by the imaging unit; and
an input unit that inputs the pass/fail determination of the work location,
wherein the input unit includes a pass determination button for performing pass determination of the work location and a fail determination button for performing fail determination of the work location, and
the control unit acquires the work image at the time of input of the pass determination button or the fail determination button, and assigns the pass/fail information to the work image.

5. A work recording method executed by a work recording system that records work performed by a worker on a work location,
wherein the work recording system comprises
an imaging unit that images the work location to acquire a work image, and
a control unit that executes pass/fail processing for performing pass/fail determination of the work location based on the work image, and
the control unit
assigns pass/fail information to the work image acquired by the imaging unit, and
records the work image to which the pass/fail information is assigned.
